Europäisches Patentamt

European Patent Office

Office européen des brevets

(19)

(11) **EP 0 899 958 A2**

(12) **EUROPÄISCHE PATENTANMELDUNG**

(43) Veröffentlichungstag:
03.03.1999 Patentblatt 1999/09

(51) Int. Cl.⁶: **H04N 7/26**

(21) Anmeldenummer: 98115394.3

(22) Anmeldetag: 17.08.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **27.08.1997 DE 19737258
30.10.1997 DE 19747958**

(71) Anmelder: **IAT AG
5300 Turgi (CH)**

(72) Erfinder:
• **Seiler, Ruedi, Prof.
14612 Falkensee (DE)**
• **Borac, Silviu
Toronto M4L 3T6 (CA)**
• **Friese, Nicolas
10999 Berlin (DE)**

• **Friedrich, Axel
12059 Berlin (DE)**
• **Sablatnig, Jan
14169 Berlin (DE)**
• **Jung, Klaus, Dr.
12203 Berlin (DE)**
• **Kreft, Christian
65193 Wiesbaden (DE)**
• **Ortmann, Armin
10559 Berlin (DE)**
• **Wilke, Marc
12209 Berlin (DE)**

(74) Vertreter:
**Eisenführ, Speiser & Partner
Martinistrasse 24
28195 Bremen (DE)**

(54) **Bilddatenübertragungsverfahren**

(57) Die Erfindung betrifft ein Verfahren zur Übertragung und/oder Speicherung digitaler Daten, insbesondere Bilddaten, über einen Datenkanal, bei dem mindestens eine diskrete Wavelettransformation durchgeführt wird, die aus den Daten jeweils mindestens zwei Datenbänder erzeugt, und bei dem die von der mindestens einen diskreten Wavelettransformation erzeugten Datenbänder zur Speicherung und/oder Einspeisung in den Datenkanal weiterverarbeitet werden. Erfindungsgemäß werden die von der mindestens einen Wavelettransformation erzeugten Datenbänder einzeln weiterverarbeitet und unabhängig von der Weiterverarbeitung und Übertragung und/oder Speicherung anderer Datenbänder gespeichert und/oder an den Datenkanal übertragen.

Fig. 1

EP 0 899 958 A2

**Beschreibung**

Die vorliegende Erfindung bezieht sich auf ein Verfahren zur Speicherung und/oder Übertragung digitaler Daten, insbesondere Bilddaten, über einen Datenkanal, bei der mindestens eine diskrete Wavelettransformation durchgeführt wird, die aus den Daten jeweils mindestens zwei Datenbänder erzeugt und bei dem die von der mindestens einen diskreten Wavelettransformation erzeugten Datenbänder zur Einspeisung in den Datenkanal weiterverarbeitet werden. Die Erfindung bezieht sich auch auf eine Vorrichtung zur Durchführung eines solchen Verfahrens.

Die vorliegende Erfindung bezieht sich auch auf ein Speicherelement zur Speicherung von Daten, insbesondere CD-ROM oder Diskette, auf dem mindestens ein auf einer Datenverarbeitungseinheit ausführbares Anwendungsprogramm gespeichert ist, das durch Wavelettransformation digitaler Bilddaten entstandene Datenbänder zu verarbeiten vermag.

Die Erfindung bezieht sich auch auf einen Bilddatenübertragungsverfahren und eine Bilddatenübertragungsvorrichtung zur Übertragung digitaler Bilddaten über einen Datenkanal.

Die Erfindung bezieht sich außerdem auf ein Verfahren zur Aufbereitung digitaler Daten, insbesondere Bilddaten zur Speicherung und/oder Übertragung der Daten an einen Datenkanal nach einer der Bilddatenaufbereitung nachgeschalteten Quantisierung und Kodierung, bei dem mindestens eine diskrete Wavelettransformation mit einem Waveletfilter durchgeführt wird, der mindestens einen nicht-ganzzahligen Koeffizienten enthält. Die Erfindung bezieht sich auch auf ein Speicherelement, auf dem mindestens ein Anwendungsprogramm gespeichert ist, das digitale Daten durch eine Wavelettranformation mit mindestens zwei Waveletfiltern aufbereitet, wobei mindestens ein Koeffizient eines bei der Wavelettransformation verwendeten Waveletfilters nicht ganzzahlig ist.

Die Erfindung bezieht sich auch auf ein Verfahren zur Präkodierung digitaler Bilddaten zur Speicherung und/oder Übermittlung der Daten an einen Datenkanal nach einer der Präkodierung nachgeschalteten Kodierung, bei den 2-dimensionale Bilddaten $b_{i,j}$ zumindest in einem ersten Bildbereich mit einer bijektiven Funktion f in einen 1-dimensionalen Datenstrom aus Daten $d_k$ abgebildet werden kann, wobei i, j, k natürliche Zahlen sind. Die Erfindung bezieht sich auch auf ein Speicherelement, auf dem ein Anwendungsprogramm gespeichert ist, das ein solches Verfahren ausführt.

Schließlich bezieht sich die Erfindung auch auf ein Verfahren zur Kodierung digitaler präkodierter Bilddaten mit einem statistischen arithmetischen Kodierer, der eine Kodierung der Bilddaten gemäß einem adaptiv veränderbaren Wahrscheinlichkeitsmaß kodiert.

Verfahren und Vorrichtungen zur Bilddatenübertragung sind seit vielen Jahren bekannt. Zur schnellen weltweiten Versendung von Bildern werden Bilder digitalisiert und über Datennetze - beispielsweise mit Hilfe des Internets - übermittelt. Die Digitalisierung und Speicherung von Bildern auf einem elektronischen Medium ist unbestritten vorteilhaft, da hierdurch große Bildarchive durch vergleichsweise kompakte z.B. magnetische Datenträger ersetzt werden können. Die Speicherung von Bildern in digitaler Form ermöglicht den augenblicklichen Zugriff auf jedes beliebige Bild unter Zehn- oder Hunderttausenden. Hochauflösende digitalisierte Bilder besitzen jedoch einen erheblichen Bedarf an Speicherplatz. Ein kleines Bild mit 640 x 480 Punkten und 256 Farben benötigt bereits 300 KByte Speicherplatz auf einer Festplatte. Ein Bild mit höherer Auflösung erfordert einen erheblich größeren Speicherplatz: Bei 1.024 x 768 Punkten und 24 Bit Farbtiefe ergibt sich ein Speicherplatzbedarf von mehr als 2 MByte. Bei der Datenübertragung führen solche riesigen Datenmengen zu sehr langen Übertragungszeiten, da Übertragungskanäle nur eine begrenzte Anzahl von Byte pro Sekunde übermitteln können. Für viele Anwendungen ist aufgrund der begrenzten Bildübertragungsgeschwindigkeit die Zeitspanne zwischen der senderseitigen Bilddatenaufbereitung und -einspeisung in den Datenkanal einerseits und der empfängerseitigen Bilddatenrekonstruktion und Bildanzeige andererseits zu lang.

Zur Verminderung des Speicherplatzbedarfs - und damit gleichzeitig auch zur Ermöglichung einer schnelleren Bildübertragung - werden Datenkompressionsverfahren angewandt. Eine Datenkomprimierung ist ein Prozeß, mit dem die Anzahl der Byte verringert wird, die zur Darstellung von Daten benötigt wird. Das Verfahren ersetzt wiederholt auftretende Datenbyte oder -zeichen durch eine geringere Anzahl speziell verschlüsselter Byte. Dadurch nehmen die komprimierten Daten weniger Speicherplatz in Anspruch. Komprimierungsverfahren machen sich die Tatsache zunutze, daß bestimmte Byte/Zeichen immer wieder in den Dateien auftreten. Diesen Bytefolgen wird ein kürzerer Code zugeordnet. Je nachdem, wie oft diese Bytefolgen in einer Datei vorkommen und wie groß diese Bytefolgen sind können die Dateien um viele Größenordnungen verkleinert werden. Zur Wiederherstellung des Originalbildes wird ein invertiertes Komprimierungsverfahren in umgekehrter Reihenfolge angewandt: Die kürzeren Codes, die bestimmte Bytefolgen ersetzt haben, werden durch die ursprünglichen Bytefolgen wieder ausgetauscht.

Ein weiteres bekanntes Verfahren zur Bilddatenkomprimierung besteht darin, die Auflösung eines digitalisierten Bildes zu verringern. Dies führt zwar zu einer Verkleinerung der Dateien; die Bildqualität wird bei diesem Verfahren aber ebenfalls verschlechtert.

1992 ist von der ISO/IEC ein Verfahren zum internationalen Standard erklärt worden, daß mit "JPEG" bezeichnet wird. Das Kürzel "JPEG" steht für "Joint Photography Experts Group" und beinhaltet vier Grundverfahren zur Bilddatenkompression. Bei zwei dieser Verfahren handelt es sich um sogenannte verlustbehaftete Verfahren, bei denen hohe Datenkompressionsraten bei verschlechterter Bildqualität erreicht wird, bei einem Verfahren um einen verlustfreien Modus mit einer allerdings nur bescheidenen Kompressionsrate von etwa 2:1 und bei einem Verfahren mit einem sogenannten hierarchischen Mode um ein Verfahren, das eine Skalierung unterschiedlicher Bilder gestattet.

Beispielhaft wird nachfolgend ein verlustbehafteter sequentieler "JPEG"-Modus beschrieben. Wie jedes Datenkompressionsverfahren basiert dieser Modus aus den Verfahrensschritten der Datenaufbereitung, der Datenverarbeitung, der Quantisierung und schließlich der Kodierung. Zur Rekonstruktion nach Übertragung oder Speicherung der Daten werden die invertierten Schritte in umgekehrter Reihenfolge durchlaufen.

Bei der Bilddatenaufbereitung wird die Pixel-Information eines Bildes in eine Vielzahl von Blöcken zerlegt. In der Bilddatenverarbeitungsstufe wird die Bildformation in eine Darstellung transformiert, die sich besser zur Kompression eignet. Hierzu wird beispielsweise die 2-dimensionale diskrete Kosinustransformation (DCT) angewandt. Diese Transformation - wie auch die Fouriertransformation - beinhaltet die Abbildung eines Zeitsignals in ein Frequenzsignal. Je kontrastreicher und dichter eine Bildinformation ist, desto höher der Anteil an hohen Frequenzen. Zur Kodierung wird die diskrete Kosinustransformation auf jeden einzelnen bei der Datenaufbereitung erzeugten Blöcke angewandt. Aus einem Bilddatenblock von 8 x 8 Pixeln resultieren bei dieser Transformation 64 DCT-Koeffizienten, von denen einer die Farbe bzw. die Graustufe eines Bocks festlegt, während die anderen Koeffizienten den Frequenzgehalt des Bildmusters beschreiben. Mit der Transformation der Bilddaten erfolgt zwar noch keine Datenkompression; die transformierten Bilddaten sind aber besser komprimierbar.

In einem der Transformation nachfolgenden Quantisierungsschritt erfolgt die Reduktion der Bildinformation. Die Koeffizienten der diskreten Kosinustransformation werden durch Quantisierungsfaktoren dividiert und das Resultat auf den nächsten ganzzeiligen Wert gerundet. Der aus der Quantisierung resultierende Strom von Bytes wird mit der bekannten Lauflängen-Kodierung kodiert. Bei dieser Kodierung wird gleichzeitig auch eine Komprimierung vorgenommen, da als Resultat der Quantisierung häufig längere Folgen von Nullen entstehen. Die Gesamtlänge des Codes wird durch weitere Kodierverfahren minimiert.

Bei dem vorstehend beschriebenen Verfahren werden von einem Präkodierer die 2-dimensionalen Bilddaten in einen 1-dimensionalen Datenstrom übertragen. Die Abtastung erfolgt zeilen- oder spaltenweise.

Das vorstehend beschriebene verlustbehaftete "JPEG"-Verfahren basierend auf einerdiskreten Kosinustransformation besitzt allerdings einige Nachteile. Bei starker Komprimierung treten Unstetigkeiten zwischen aneinander angrenzenden rekonstruierten Blöcken von 8 x 8 Pixeln auf. Außerdem ermöglicht das Verfahren nach "JPEG" keine Skalierung zur Erzielung verschiedener Auflösungen.

Zur Vermeidung dieser Nachteile ist bereits über eine der Datenkompression vorgeschalteten Datenaufbereitung mit Wavelets (bezogen auf vorstehendes Beispiel anstelle der diskreten Kosinustransformation) nachgedacht worden, vgl. A. K. Louis et al.: "Wavelets", 1994, M. V. Wickerhauser: Adapted Wavelet Analysis from Theory to Software (1994), A. K. Peters, Wellesley, Massachusetts.

Bei der Wavelettransformation wird ein Bild mit speziellen Tiefpass- und Hochpassfiltern stufenweise transformiert. Nach der ersten Transformationsstufe entsteht ein Band mit tieferliegenden Skalen (Tiefpass), das eine geglättete Approximation an das ursprüngliche Bild darstellt, sowie - bei Anwendung der Wavelettransformation auf die Spalten und Zeilen eines Bildes - drei weitere Bänder, die bei der Glättung "verlorengegangene" Details beinhalten. Ein erstes dieser drei Bänder enthält die vertikalen Frequenz- und Raumanteile, das zweite Band die horizontalen Frequenz- und Raumanteile und das dritte Band diagonale Frequenz- und Raumanteile einer jeweils festgelegten Skala. Dieser Transformationsschritt kann (typischerweise auf dem Tiefpass) wiederholt werden. Der Vorteil der Wavelettransformation besteht in erster Linie darin, daß der ihr zugrundeliegende Algorithmus schnell computergestützt berechenbar ist, daß die für die optische Wahrnehmung eines Bildes wesentlichen Informationen sehr viel besser als mit anderen Verfahren extrahiert werden können, daß wesentliche Strukturen besonders betont werden können und das Bild leicht skaliert werden kann.

Eine erste Aufgabe der vorliegenden Erfindung besteht darin, ein Verfahren anzugeben, mit dem Daten bei möglichst großer Kompressionsrate und hoher Rekonstruierbarkeit speicher- und übertragbar sind.

Erfindungsgemäß werden bei einem Verfahren zur Speicherung und/oder Übertragung digitaler Daten der eingangs genannten Art die von der mindestens einen Wavelettransformation erzeugten Datenbänder einzeln weiterverarbeitet und unabhängig von der Weiterverarbeitung und Übertragung und/oder Speicherung anderer Datenbänder gespeichert und/oder an den Datenkanal übertragen werden.

Der Vorteil des erfindungsgemäßen Verfahrens und der erfindungsgemäßen Vorrichtung besteht darin, daß bei der unabhängigen Verarbeitung der einzelnen Datenbänder bei der Übertragung der verarbeiteten Daten empfängerseitig bereits mit der Dekodierung eines ersten empfangenen Datenbandes begonnen werden kann, während die Weiterverarbeitung wavelettransformierter Daten senderseitig noch nicht abgeschlossen ist. Die Übertragungsgeschwindigkeit wird hierbei erheblich vergrößert. Außerdem kann aus den ersten Datenbändern bereits ein erstes Bild mit noch verminderter Qualität erzeugt werden, das dem Betrachter rasch einen ersten Eindruck vermitteln kann. Bei der Suche nach bestimmten Bildern kann ein Benutzer daher bereits relativ schnell erkennen, ob ein sich successive entwickelndes Bild "das Richtige" ist und bereits vor Abschluß der vollständigen Rekonstruktion des Bildes abbrechen und ein anderes Bild auswählen.

Die Weiterverarbeitung eines jeden Datenbandes nach der Wavelettransformation umfaßt vorteilhafterweise eine Quantisierung der in dem Datenband enthaltenen Daten sowie eine nachfolgende Kodierung. Zur Verkleinerung der Datenmenge werden hierbei vorteilhafterweise die in einem jeweiligen Datenband enthaltenen Daten komprimiert.

Bilddaten werden bei einem erfindungsgemäßen Verfahren vorteilhafterweise nach der Quantisierung einer Präkodierung unterzogen, bei der 2-dimensionale Bilddaten in ein 1-dimensionalen Datenstrom übertragen werden.

Erfindungsgemäß werden bei einem Verfahren zur Speicherung und/oder digitaler Daten der eingangs genannten Art interpolierende Wavelets verwendet.

Die Aufgabe wird bei einer Vorrichtung zur Durchführung des vorstehend beschriebenen Verfahrens mit einer zentralen Prozessoreinheit, einer Dateneingabeschnittstelle für digitale Daten, einer Speichereinrichtung und/oder einer mit einem Datenübertragungskanal koppelbaren Datenausgabeschnittstelle, einer Einrichtung zur Durchführung mindestens einer Wavelettransformation und einer Einrichtung zur Weiterverarbeitung der von der Einrichtung zur Durchführung mindestens einer Wavelettranformation erzeugten Datenbänder, um die der weiterverarbeiteten Daten auf einem Datenträger zu speichern und/oder über die Datenausgabeschnittstelle in den Datenkanal einzuspeisen, erfindungsgemäß dadurch gelöst, daß die Einrichtung zur Weiterverarbeitung die von der Einrichtung zur Durchführung mindestens einer Wavelettransformation erzeugten Datenbänder einzeln weiterverarbeitet und unabhängig von der Weiterverarbeitung und Speicherung und/oder Übertragung anderer Datenbänder speichert und/oder an die Datenausgabeschnittstelle überträgt.

Der Vorteil der erfindungsgemäßen Vorrichtung besteht - ebenso wie bei dem vorstehend beschriebenen Verfahren - darin, daß bei der Übertragung der verarbeiteten Daten empfängerseitig mit der Dekodierung eines ersten empfangenen Datenbandes sofort begonnen werden kann. Aus den ersten empfangenen und dekodierten Datenbändern kann bereits ein erstes Bild relativ rasch konstruiert werden, das sehr schnell einem Betrachter zur Verfügung steht.

Vorteilhafte Weiterbildungen dieser erfindungsgemäßen Vorrichtung sind durch die Merkmale der Ansprüche 9 bis 13 gekennzeichnet.

Die Aufgabe wird bei einem Speicherelement zur Speicherung von Daten, insbesondere CD-ROM oder Diskette, auf dem mindestens ein auf einer Datenverarbeitungseinheit ausführbares Anwendungsprogramm gespeichert ist, das durch Wavelettransformation digitaler Bilddaten entstandene Datenbänder zu verarbeiten vermag, erfindungsgemäß dadurch gelöst, daß ein auf dem Speicherelement gespeichertes Anwendungsprogamm die Datenbänder einzeln und unabhängig von der Weiterverarbeitung und Übertragung und/oder Speicherung anderer Datenbänder zur Speicherung und/oder Übertragung an einen Datenkanal weiterverarbeitet.

Vorteilhafte Ausgestaltungen des erfindungsgemäßen Speicherelementes sind in den Ansprüchen 15 bis 18 angegeben.

Die Aufgabe wird bei einem Speicherelement zur Speicherung von Daten, insbesondere CD-ROM oder Diskette, auf dem mindestens ein auf einer Datenverarbeitungseinheit ausführbares Anwendungsprogramm gespeichert ist, das durch Wavelettransformation digitaler Bilddaten entstandene Datenbänder zu verarbeiten vermag, erfindungsgemäß dadurch gelöst, daß ein auf dem Speicherelement gespeichertes Anwendungsprogramm eine interpolierende Wavelettransformation durchführt.

Bei einem erfindungsgemäßen Bilddatenübertragungsverfahren, bei dem digitale Bilddaten über einen Datenkanal übertragen werden wird, auf der Senderseite das vorstehend beschriebene Verfahren durchgeführt, während auf der Empfängerseite die entsprechenden invertierten Verfahrensschritte in umgekehrter Reihenfolge durchgeführt werden. Erfindungsgemäß enthält eine Bilddatenübertragungsvorrichtung zur Übertragung digitaler Bilddaten über einen Datenkanal neben der vorstehend erwähnten Vorrichtung zur Durchführung des Verfahrens zur Speicherung und/oder Übertragung digitaler Bilddaten über einen Datenkanal eine Empfangsvorrichtung, die die zu einem senderseitigen Verfahren invertierten Verfahrensschritte in umgekehrter Reihenfolge durchführt und entsprechende Merkmal aufweist.

Die Aufgabe der Erfindung wird bei einem Verfahren zur Aufbereitung digitaler Daten, insbesondere Bilddaten, zur Speicherung und/oder Übertragung der Daten über einen Datenkanal nach einer der Bilddatenaufbereitung nachgeschalteten Quantisierung und Kodierung, bei der mindestens eine Wavelettransformation mit einem Waveletfilter durchgeführt wird, der mindestens einen nicht-ganzzahligen Koeffizienten enthält, erfindungsgemäß dadurch gelöst, daß die Koeffizienten der Waveletfilter algebraische Zahlen sind.

Die Koeffizienten typischer Waveletfilter sind Wurzeln von Polynomen mit ganzzahligen Koeffizienten und damit nicht als rationale Zahlen darstellbar. Eine verlustfreie Implementierung eines Wavelet-Algorithmus ist daher im Rahmen eines Kodes mit rationalen Zahlen nur mit Hilfe einer Differenz-Bild-Übertragung möglich. Durch die Verwendung von algebraischen Zahlen, also Zahlen aus einer Menge, die die ganzen Zahlen um die Nullstellen von Polynomen mit ganzzahligen Koeffizienten erweitert, kann ein Computer im wesentlichen weiter mit ganzen Zahlen rechen. Dies führt zu einer erheblich schnelleren Rechengeschwindigkeit als bei Gleitkommaoperationen und es werden auch Rundungsfehler vermieden Die Verwendung algebraischer Zahlen als Koeffizienten der Waveletfilter führt daher zu einer erheblichen Steigerung der Verarbeitungsgeschwindigkeit.

Die Aufgabe der Erfindung wird bei einem Verfahren zur Aufbereitung digitaler Daten, insbesondere Bilddaten zur Speicherung und/oder Übertragung der Daten über einen Datenkanal nach einer der Bilddatenaufbereitung nachgeschalteten Quantisierung und Kodierung, bei der mindestens eine Wavelettransformation mit einem Waveletfilter durchgeführt, der mindestens einen nicht-ganzzahligen Koeffizienten enthält, erfindungsgemäß auch dadurch gelöst, daß die Koeffizienten der Waveletfilter dyadische Zahlen sind.

Die vorstehende Aufgabe wird bei einem Verfahren zur Präkodierung digitaler Bilddaten zur Speicherung und/oder Übermittlung der Daten an einen Datenkanal nach einer der Präkodierung nachgeschalteten Kodierung, bei dem 2-dimensionale Bilddaten $B_{i,j}$ zumindest in einem ersten Bildbereich mit einer bijektiven Funktion f in einen 1-dimensionalen Datenstrom aus $D_k$ abgebildet werden, wobei i, j, k natürliche Zahlen sind, erfindungsgemäß dadurch gelöst, daß die Umkehrfunktion $f^{-1}$ eine Diskretisierung einer Peano-Kurve ist.

In der Präkodierung, geschieht die Übertragung von 2-dimensionalen Bilddaten in einen 1-dimensionalen Datenstrom. Dabei wird erfindungsgemäß die Korrelation der in zwei Dimensionen benachbarten Punkten ausgenutzt, um in der anschließenden Kodierung höhere Kompressionsraten zu erzielen. Die Peano-Kurve besitzt die Eigenschaft, daß die räumliche Nähe von Punkten in der 2-dimensionalen Anordnung in optimaler Weise auf eine räumliche Nähe der Punkte im 1-dimensionalen Bildbereich abgebildet wird. Erfindungsgemäß wird entlang einer Kurve abgetastet, die die zweidimensional angeordneten Daten so durchläuft, daß jeder Punkt genau einmal erreicht wird. Die Kurve ist raumfüllend. Der Vorteil dieses Präkodierungsverfahren besteht darin, daß im 1-dimensionalen Datenstrom aufgrund der stärkeren Korrelation benachbarter Punkte eine höhere Datenkompressionsrate erzielt werden kann.

Die vorstehende Aufgabe wird bei einem Speicherelement zur Speicherung von Daten, insbesondere CD-ROM oder Diskette, auf dem mindestens ein auf einer Datenverarbeitungseinheit ausführbares Anwendungsprogramm gespeichert ist, das 2-dimensionale Bilddaten $B_{i,j}$ zumindest in einem ersten Bildbereich mit einer bijektiven Funktion f in einen 1-dimensionalen Datenstrom aus Daten $D_k$ abbildet, wobei i, j, k natürliche Zahlen sind, erfindungsgemäß dadurch gelöst, daß die Umkehrfunktion $f^{-1}$ eine Diskretisierung einer Peano-Kurve ist.

Die vorstehende Aufgabe wird bei einem Verfahren zur Kodierung digitaler präkodierter Bilddaten mit einem statistischen arithmetischen Kodierer, der eine Kodierung der Daten gemäß einem adaptiv veränderbaren Wahrscheinlichkeitsmaß kodiert erfindungsgemäß dadurch gelöst, daß das Wahrscheinlichkeitsmaß eine Markovkette beliebiger Länge mit Coarse-Graining ist.

Der Vorteil des erfindungsgemäßen Verfahrens zur Kodierung digitaler präkodierter Bilddaten besteht in erster Linie darin, daß die Kodierung mit dem erfindungsgemäßen Wahrscheinlichkeitsmaß effektiver durchgeführt werden kann. Der Kodierer mißt eine empirische Markov-Verteilung und verwendet diese als Grundlage zur Kodierung.

Nachfolgend werden Ausführungsbeispiele der Erfindung anhand der beigefügten Zeichnungen näher erläutert. Es zeigen;

Fig. 1     eine schematische Darstellung eines strukturierten Bildes mit sieben Teilstücken, die Datenbänder repräsentieren, die durch Wavelettransformation eines Bildes entstanden;

Fig. 2     eine schematische Darstellung einer Baumstruktur von Matrizen, in denen Daten eines Datenbandes abgelegt werden, die aus einer Wavelettransformation hervorgehen;

Fig. 3     eine schematische Darstellung zu Präkodierung von Bilddaten mit Peano-Kurven;

Fig. 4     eine schematische Darstellung zur Veranschaulichung einer Markovkette mit Coarse-Graining.

1. Verfahren zur Übertragung und/oder Speicherung digitaler Daten mit Wavelettransformation

1.1 Mathematische Beschreibung eines Bildes

Zur Beschreibung eines Bildes mit B Pixeln in der Breite und H Pixeln in der Höhe benützt man drei Funktionen $F = (F_R, F_G, F_B)$, die auf $\{1,...,H\} \times \{1,...,B\}$ definiert sind und ihre Werte in $\{0,...,255\}$ annehmen. $F_R$ (rot), $F_G$ (grün), $F_B$ (blau) beschreiben die drei Farbebenen. Somit ist jeder Pixel in jeder Farbebene in 8 Bits kodiert.

1.2 Farbtransformation

Das ursprüngliche Bild F in der RGB-Farbdarstellung wird durch eine lineare Transformation $\phi$ pixelweise in eine neue Farbdarstellung $YC^1C^2$ transformiert.

$$\begin{pmatrix} Y_{i,j} \\ C^1_{i,j} \\ C^2_{i,j} \end{pmatrix} = \Phi \begin{pmatrix} R_{i,j} \\ G_{i,j} \\ B_{i,j} \end{pmatrix}$$

Dabei ist Y eine Intensitätsebene, $C^1$, $C^2$ zwei Farb- (Differenz-) Ebenen. Die Transformation $\phi$ wird so gewählt, daß die visuell stärksten Informationen in der Y-Ebene konzentriert werden, während sich in den $C^i$-Ebenen visuell geringer zu wichtende Informationen befinden.

1.3 Wavelet-Transformation

Gegeben seien eine Skalenfunktion und ein biorthogonales Wavelet $\phi^0$, $\phi^1 \in L^2$ (R) mit dem zugehörigen diskreten Wavelet Filterpaar ($h^0$, $h^1$), d. h. es gilt

$$\frac{1}{\sqrt{2}}\phi^0(\frac{x}{2}) = \sum_{k \in \mathbb{Z}} h^0_k \phi^0(x-k)$$

$$\frac{1}{\sqrt{2}}\phi^1(\frac{x}{2}) = \sum_{k \in \mathbb{Z}} h^1_k \phi^0(x-k)$$

($\{h^\alpha_k\}_{k \in \mathbb{Z}} \in l^2(\mathbb{Z})$, $\alpha \in \{0,1\}$). Die benutzten Filterpaare besitzen endlichen Träger, d.h. es gibt natürliche Zahlen $N^\alpha$ derart, daß $h^\alpha_i = 0$ für $|i| > N^\alpha$. Sei

$$V_0 := \overline{<< \phi^0(\cdot - n) \mid n \in \mathbb{Z} >>}$$

$$V_{-1} := \overline{<< \frac{1}{\sqrt{2}}\phi^0(\frac{\cdot}{2} - n) \mid n \in \mathbb{Z} >>}$$

$$W_{-1} := \overline{<< \frac{1}{\sqrt{2}}\phi^1(\frac{\cdot}{2} - n) \mid n \in \mathbb{Z} >>},$$

wobei $\overline{\langle\langle g_n \mid n \in \mathbb{Z} \rangle\rangle}$ den Abschluß der Menge der endlichen Linearkombinationen aus Funktionen $g_n$, $n \in \mathbb{Z}$ bezeichnet. Aus den Eigenschaften eines Wavelets folgt $V_0 = V_{-1} \oplus W_{-1}$. Mit $\tilde{\phi}^0, \tilde{\phi}^1, \tilde{h}^0, \tilde{h}^1$ seien die zugehörigen dualen Objekte bezeichnet.

Jede Funktion $f \in V_0$ läßt sich nun nach den Basisvektoren $\phi^0(\cdot - n)$ bzw.

$$\frac{1}{\sqrt{2}}\phi^0(\frac{\cdot}{2}-n)$$

und

$$\frac{1}{\sqrt{2}}\phi^1(\frac{\cdot}{2}-n)$$

entwickeln:

$$f(x) = \sum_{k \in \mathbb{Z}} f_k \phi^0(x - k)$$

$$= \sum_{k \in \mathbb{Z}, \alpha \in \{0,1\}} f_k^\alpha \frac{1}{\sqrt{2}} \phi^\alpha(\frac{x}{2} - k)$$

mit

$$f_k := \left\langle f, \phi^0(\cdot - k) \right\rangle, \; f_k^\alpha := \left\langle f, \frac{1}{\sqrt{2}} \phi^\alpha(\frac{\cdot}{2} - k) \right\rangle$$

Hierbei bezeichnet $\langle \cdot, \cdot \rangle$ das Skalarprodukt im $L^2(\mathbb{R})$.

Ist die Skalenfunktion interpolierend (vgl. Abschnitt 1.9), so gilt;

$$f_k = f(k) \qquad (k \in \mathbb{Z}).$$

In diesem Fall können wir also ohne Integration aus dem diskreten Bild $F$ die diskreten Wavelet-Koeffizienten $f_k^\alpha$ berechnen und aus den $f_k^\alpha$ umgekehrt direkt wieder das diskrete Bild $F$ rekonstruieren

Für ein eindimensionales Bild $\{f_k\}_{k=0,...,B}$ ergibt sich:

$$f_n^\alpha = \sum_{k \in \mathbb{Z}} \overline{h_{k-2n}^\alpha} f_k$$

$$f_k = \sum_{n \in \mathbb{Z}, \alpha = 0,1} h_{k-2n}^\alpha f_n^\alpha$$

Dabei wird $f_k$ für $k \notin \{0,...,B\}$ durch eine geeignete Vorschrift fortgesetzt (Randbehandlung).

Für ein zweidimensionales Bild $\{F_{i,j}\}_{i=0,...,B, \, j=0,...H}$ ergibt sich durch Tensorierung:

$$F_{n,m}^{\alpha,\beta} = \sum_{k \in \mathbb{Z}} \sum_{l \in \mathbb{Z}} \overline{h_{k-2n}^\alpha} \; \overline{h_{l-2m}^\beta} F_{k,l}$$

$$F_{k,l} = \sum_{n \in \mathbb{Z}, \alpha = 0,1} \sum_{m \in \mathbb{Z}, \beta = 0,1} h_{k-2n}^\alpha h_{l-2m}^\beta F_{n,m}^{\alpha,\beta}.$$

1.4 Wavelettransformation eines Bildes, Zerlegung in unabhängige Bänder

Ein zu transformierendes Bild der Größe $H_0 \times B_0$ wird durch Randbehandlung auf $H \times B$ soweit vergrößert bis sowohl Höhe wie Breite durch 2 teilbar sind. Danach wird das Bild wavelettransformiert (vgl. Abschnitt 1.3). Daraus ergibt sich ein strukturiertes Bild mit einem Low-Pass-Anteil $F_{n,m}^{00}$ und den 3 High-Pass-Anteilen $F_{n,m}^{01}$, $F_{n,m}^{10}$ und $F_{n,m}^{11}$, $n \in \{1,...,\frac{B}{2}\}$, $m \in \{1,...,\frac{H}{2}\}$.

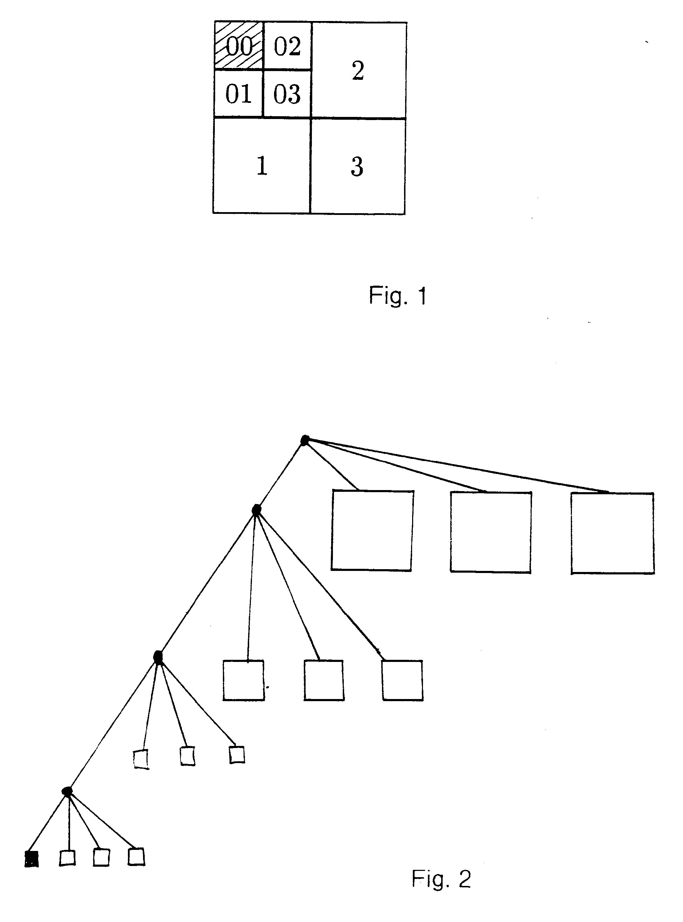

Die 4 Teile werden wiederum als einzelne Bilder aufgefaßt und der Low-Pass-Anteil (ggf. nach erneuter Anpassung seiner Höhe und Breite) Wavelettransformiert. Daraus ergibt sich ein strukturiertes Bild mit 7 Teilstücken, das schematisch in Fig. 1 dargestellt ist.

Diese Transformation wird in der Regel bis zu 4 mal durchgeführt, wobei sich die Anzahl sich nach der Größe des Bildes und nach den in der Wavelettransformation maximal auftretenden Zahlenwerten richtet. Das daraus entstehende strukturierte Bild hat maximal 13 Teile, Bänder genannt. Sie bestehen aus dem Low-Pass-Anteil und maximal 12 High-Pass-Anteile. Jeder Anteil ist durch eine Funktion F(n) gegeben wo $n \in I$ die Koordinate der Pixel bezeichnet, die zu dem Band gehören. Die Daten werden in Matrizen abgelegt, die in einer Baumstruktur angeordnet sind. Eine solche Baumstruktur ist in Fig. 2 dargestellt.

Die einzelnen Matrizen werden den nachfolgenden Tools unabhängig voneinander zur weiteren Verarbeitung zugeführt.

## 1.5 Quantisierung

Im Anschluß an die Wavelettransformation eines Bildes wird jedes Band für sich alleine weiterbehandelt. Damit kann die Optimierung des Kodes sehr flexibel und schnell gemacht werden. Die verwendete Quantisierung ist eine sogenannte "Equiquantisierung mit Deadzone": Sei $F(n) \in \ell^2$ (I) die Darstellung des Bildes in einem Band. Der Wertebereich von F wird in Intervalle der gleichen Länge aufgeteilt (equiquantisiert) bis auf ein einziges, die sogenannte Deadzone. Sie ist um den Nullwert zentriert. Die Größe der Deadzone und die Anzahl der Intervalle sind wählbare Parameter, die zur Optimierung des Kodes wesentlich sind. Sie beeinflussen die Qualität einer verlustbehafteten Kompression, sowie die Kompressionsrate. Die Einteilung des Wertebereiches in die Intervalle J definiert eine $\sigma$-Algebra $\Sigma$ (durch Vereinigung und Durchschnittsbildung von Elementen in J). Damit existiert eine natürliche Projektion $\pi$ von $\ell^2$(I) auf die $\Sigma$-messbaren Funktionen auf I, die sogenannte Quantisierung. Falls $F \in \ell^2$(I) die Bandfunktion bezeichnet, heißt $\pi$(F) die Quantisierung von F. Die Daten $\pi$(F) werden wiederum in einer Matrix abgelegt.

## 1.6 Präkodierung

Der Datenstrom, der vom Sender zum Empfänger geschickt wird, ist in der Zeit linear angeordnet. Um die in den Matrizen 2-dimensional angeordneten Daten auf diese Form zu bringen, müssen sie gescannt werden. In unserem Algorithmus werden verschiedene Scanningarten benutzt. Es wird zeilenweise, spaltenweise über die Matrix gegangen, oder es wird nach längs einer Hilbertkurve (vgl. Abschnitt 3) gescannt. Die Bildqualität und Kompressionsrate hängt wesentlich von der Wahl der Scanningmethode ab. So ist es günstiger das Band $F^{01}$ längs Zeilen zu scannen und $F^{10}$ längs Spalten als umgekehrt. Für Bilddaten mit stark räumlicher Korrelation ist die Hilbertkurve besonders geeignet.

## 1.7 Kodierung

Die Basis unseres Kodierers ist der arithmetische Kodierer von I. H. Witten, R. M. Neal und J. Cleary (Commun. ACM 30, 6 page 520-541) in der aktualisierten Form von A. Moffat, R. M. Neal und I. H. Witten (Preprint). Er ist der zur Zeit beste statistische Kodierer. Wir haben ihn auf die Verwendung von Markovketten beliebiger Länge ausgebaut (vgl. Abschnitt 4). Die Länge kann für jedes Band einzeln gewählt werden. Der Kodierer arbeitet adaptiv, d. h. die der Kodierung zugrunde liegende Statistik wird ständig einem Update unterworfen. Der Kodierer mißt eine empirische Markov-Verteilung und verwendet diese als Grundlage der Kodierung (vgl. Abschnitt 4).

## 1.8 Beispiel eines diskreten Waveletfilters

Aus Daubechies entnehmen wir folgendes Beispiel eines Waveletfilter-Paares (h, $\tilde{h}$):

$$h^0 := \{h^0_k\}_{k=-1,0} \qquad h^0_{-1} = \frac{1}{\sqrt{2}} = h^0_0$$

$$h^1 := \{h^1_k\}_{k=-4,\ldots,1} \qquad h^1_{-4} = \frac{1}{16\sqrt{2}} = -h^1_1 = h^1_{-3} = -h^1_0, \; h^1_{-1} = \frac{1}{2\sqrt{2}} = -h^1_{-2},$$

$$\tilde{h}^0 := \{\tilde{h}^0_k\}_{k=-3,\ldots,2} \qquad \tilde{h}^0_{-3} = \frac{-1}{16\sqrt{2}} = \tilde{h}^0_2 = -\tilde{h}^0_{-2} = -\tilde{h}^0_1, \; \tilde{h}^1_{-1} = \frac{1}{2\sqrt{2}} = \tilde{h}^1_0$$

$$\tilde{h}^1 := \{\tilde{h}^1_k\}_{k=-2,-1} \qquad \tilde{h}^1_{-1} = \frac{1}{\sqrt{2}} = -\tilde{h}^1_{-2}$$

## 1.9 Interpolierende Wavelets, Faktorisierung

Die Wavelettransformation eines Signales $f$ wird im allgemeinen auf eine diskrete Transformation der Koeffizienten $\{f_n\}_{n \in \mathbb{Z}}$ zurückgeführt. Dabei stehen $f$ und die Koeffizienten in folgenden Zusammenhang:

$$f(x) = \Sigma\, f_n\, \phi\, (x - n)$$

Um die Berechnung der Koeffizienten $\{f_n\}_{n \in \mathbb{Z}}$ ohne Integration durchzuführen und dann nach deren Transformation nicht wieder auf die Funktion $f(x)$ zurückrechnen zu müssen, ist es von Vorteil "interpolierende Wavelets" zu benutzen. Ein Wavelet heißt interpolierend, falls für alle

$$f \in V_0 := \overline{<< \phi^0(\cdot - n) \mid n \in \mathbb{Z} >>}$$

die Gleichung gilt:

$$f(n) \;=\; f_n \;,\; (n \in \mathbb{Z}).$$

Dies ist äquivalent zu $\phi^0(n) = \delta_{n0}$, $n \in \mathbb{Z}$. Die fundamentale Gleichung

$$\frac{1}{\sqrt{2}}\, \phi^0\left(\frac{x}{2}\right) \;=\; \sum h_n^0\, \phi^0\, (x - n)$$

impliziert für interpolierende Wavelets

$$h_e^0(z) := \sum_k z^{-k}\, h_{2k}^0 \;=\; \frac{1}{\sqrt{2}}.$$

d.h. der gerade Teil der Filterfunktion

$$h^0(z) = \sum z^{-k} h_k^0$$

ist konstant. Für die Polyphasenmatrix $P$ bedeutet dies

$$P(z) \;=\; \begin{pmatrix} \frac{1}{\sqrt{2}} & h_e^1(z) \\ h_o^0(z) & h_o^1(z) \end{pmatrix}$$

Für biorthogonale Wavelets mit Filtern endlicher Länge bedeutet dies, daß es ein $m \in \mathbb{Z}$ gibt derart, daß die Polyphasen-Matrix in der folgenden Form faktorisiert werden kann:

$$P(z) \;=\; \begin{pmatrix} \frac{1}{\sqrt{2}} & 0 \\ h_o^0 & \sqrt{2} \end{pmatrix} \begin{pmatrix} 1 & \sqrt{2}\, h_e^1 \\ 0 & z^m \end{pmatrix}$$

In unserem Algorithmus wird ein Wavelet dieser Typs verwendet.

1.10 Wir verwenden eine "Faktorisierung mit einstellbarer Genauigkeit": In machen Fällen muß der numerische Bereich der auftretenden Daten eingegrenzt werden. In solchen Fällen kann die lineare Transformation

$$x \dashrightarrow \sqrt{2}\, h\, x$$

durch eine beliebige nichtlineare z. B. eine Rundung von $\sqrt{2}\, h\, x$ auf eine vorgegebene Stellenzahl ersetzt werden, ohne daß die Invertierbarkeit der approximierenden diskreten Wavelet-Transformation verloren geht. Die Rundungen können in jedem Transformationsschritt beliebig gewählt werden. Dies gestattet die transformierten Daten genau an den gewünschten numerischen Bereich anzupassen.

2. Wavelet-Transformation mit Waveletfiltern, deren Koeffizienten algebraische Zahlen sind

Waveletfilter enthalten typischerweise Wurzeln von ganzen Zahlen. Um die computergestützte Verarbeitung schnell und fehlerfrei durchführen zu können ist es vorteilhaft, die Wurzeln als algebraische Zahlen zu fassen.

Ein Wavelet-Algorithmus enthält im wesentlichen nur Additionen und Multiplikationen von Zahlen. Die Filterkoeffizienten sind typischerweise nicht ganzzahlig und enthalten oftmals Wurzeln ganzer Zahlen, die irrational sind, wie z.B. $\sqrt{3}$. Deshalb wird meistens mit Float-Zahlen gerechnet, obwohl die Ausführung von Operatoren mit Float-Zahlen auf dem Computer langsamer ist als entsprechende ganzzahlige Operationen und sich Fehler dadurch ergeben können, daß die Rundungsverfahren auf den einzelnen Rechnern verschieden sind. Es ist deshalb von großem Vorteil, die auftretenden Wurzeln als algebraische Zahlen aufzufassen und im Ring der um diese algebraischen Zahlen erweiterten ganzen Zahlen zu rechnen. Die komplexe Zahl $\alpha$ heißt algebraisch bezüglich des Rings der ganzen Zahlen, falls es ein nicht triviales Polynom P(x) mit ganzzahligen Koeffizienten gibt, derart, daß P($\alpha$) = 0 ist. Dieses Verfahren erhält die Geschwindigkeit und arbeitet fehlerfrei, da Rundungen gänzlich entfallen.

2.1 Wavelet-Transformation

Die grundlegenden Gleichungen der Skalenanalyse mit Waveletfiltern sind

$$\frac{1}{\sqrt{2}}\phi^0\left(\frac{x}{2}\right) = \sum_{k \in \mathbb{Z}} h_k^0 o^0(x-k)$$

$$\frac{1}{\sqrt{2}}\phi^1\left(\frac{x}{2}\right) = \sum_{k \in \mathbb{Z}} h_k^1 o^0(x-k)$$

Sie drücken aus daß jede Funktion f aus dem abgeschlossenen Teilraum $V_0 := \langle\!\langle \phi^0(x - u) \mid n \in Z \rangle\!\rangle$ im Raum der quadratintegrierbaren Funktionen $L^2(R)$ in zwei Funktionen zerlegt werden kann

$$f = f^0 + f^1$$

und zwar so, daß

$$f^0 \in V_{-1} := \overline{<< \frac{1}{\sqrt{2}}\phi^0\left(\frac{\cdot}{2} - n\right) \mid n \in \mathbb{Z} >>}$$

$$f^1 \in W_{-1} := \overline{<< \frac{1}{\sqrt{2}}\phi^1\left(\frac{\cdot}{2} - n\right) \mid n \in \mathbb{Z} >>},$$

$\phi^0$ heißt Skalerfunktion, $\phi^1$ ist die Waveletfunktion. Sie erzeugen (nach Voraussetzung) Basen von $V_0$, $V_{-1}$ und $W_{-1}$. $h^0$ ist der Skalenfilter und $h^1$ der Waveletfilter. $f_0$ ist der Low-Pass- und $f_1$ der High-Pass-Anteil. Aus den fundamentalen Gleichungen folgt

$$\sum h_n^0 = \sqrt{2} \qquad \sum h_n^1 = 0.$$

## 2.2 Die diskrete Wavelet-Transformation

Die Zerlegung eines Signales f in den Low-Pass- und den High-Pass-Anteil erfolgt so: Sei $f \in V_0$, d.h. es gibt eine Folge $\{f_n\}_{n \in \mathbb{Z}}$ so daß

$$f(x) = \sum_n f_n \, \phi^0 \, (x - n)$$

Die fundamentalen Gleichungen implizieren die Existenz der Folgen $\{f_n^0\}$, $\{f_n^1\}$, so daß

$$f(x) = \frac{1}{\sqrt{2}} \sum_n \left( f_n^0 \, \phi^0 \left( \frac{x}{2} - n \right) + f_n^1 \, \phi^1 \left( \frac{x}{2} - n \right) \right)$$

$$= \sum_{k,n} \left( f_k^0 \, h_{n-2k}^0 + f_k^1 \, h_{n-2k}^1 \right) \phi^0 \, (x - n).$$

Daraus folgt für die diskrete inverse Wavelet-Transformation

$$f_n = \sum_k \left( f_k^0 \, h_{n-2k}^0 + f_k^1 \, h_{n-2k}^1 \right)$$

Die diskrete Wavelettransformation selbst ist analog definiert;

$$f_n^0 = \sum \overline{\tilde{h}^0}_{l-2n} \, f_l$$

$$f_n^1 = \sum \overline{\tilde{h}^1}_{l-2n} \, f_l$$

wobei $\tilde{h}^0$ und $\tilde{h}^1$ die dualen diskreten Waveletfilters bezeichnet.

2.3 Ein bekanntes Beispiel für einen Wavelet-Filter ist der sogenannte Daubechies-4-Filter:

$$h_0 = \sqrt{2}\ \frac{1-\sqrt{3}}{8},\ h_1 = \sqrt{2}\ \frac{3-\sqrt{3}}{8},\ h_2 = \sqrt{2}\ \frac{3+\sqrt{3}}{8},\ h_3 = \sqrt{2}\ \frac{1+\sqrt{3}}{8}.$$

Die Multiplikation mit $\sqrt{2}$ und die Division mit 8 ist irrelevant. (Sie wird erst am Schluß berücksichtigt). Die Multiplikation mit $\sqrt{3}$ ist jedoch problematisch. Sie wird bei dem erfindungsgemäßen Algorithmus symbolisch als Multiplikation mit y durchgeführt. Dem Computer wird dann als Regel folgende Gleichung übergeben: $y^2 - 3 = 0$. Dies genügt um die Wavelettransformation im Ring der ganzen Zahlen durchzuführen.

3. Verfahren zur Präkodierung digitaler Bilddaten mit einer Abtastreihenfolge, die dem Verlauf einer Peano-Kurve entspricht

3.1 Raumfüllende Kurven/Peano-Kurven

Sei I = [0, 1] das Einheitsintervall in R und E = 1 x 1 das Einheitsquadrat in $R^2$. Eine bijektive Abbildung

$$f : I \rightarrow E$$

heißt raumfüllend. Die Bijektivität bedeutet, daß, wenn $t \in I$ alle Werte aus I durchläuft, dann wird f(t) alle Punkte aus E genau einmal erreichen.

Ist eine solche Abbildung f zusätzlich stetig, so wird f Peano-Kurve genannt.

3.2 Beispiel einer raumfüllenden Kurve

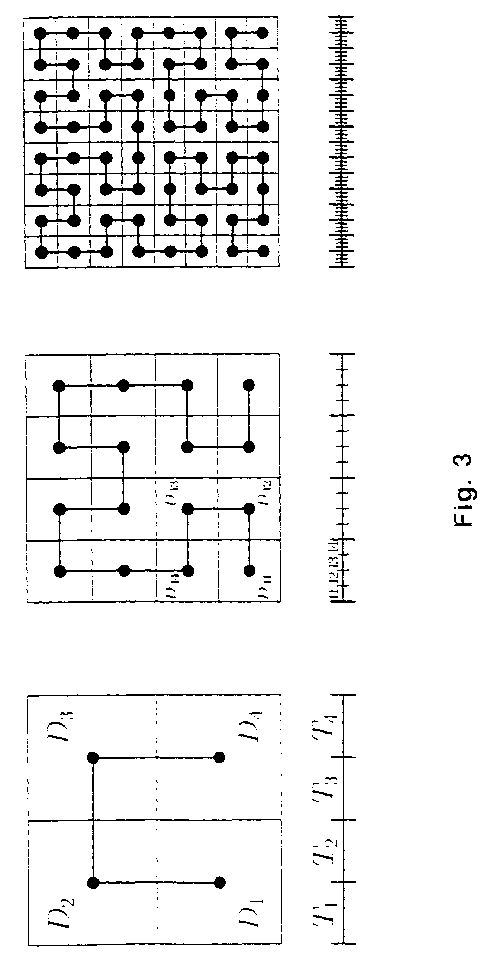

Fig. 3 zeigt eine schematisch vereinfachte Darstellung zur Konstruktion eines Beispiels einer Peano-Kurve. Das Verfahren nach Hilbert funktioniert wie folgt:

Das Quadrat E wird in vier gleich große Teilquadrate $D_1, ..., D_4$ zerlegt, und das Intervall I wird in vier gleich große Intervalle $T_1, ..., T_4$ zerlegt. Den Quadraten $D_i$ werden die Teilintervalle $T_i$ zugeordnet.

Diese Prozedur wird nun für alle Quadrate $D_i$ und Teilintervalle $T_i$ wiederholt, so daß sich eine Zuordnung von 16 Quadraten $D_{ij}$ (i, j = 1, ..., 4) zu 16 Intervallen $T_{ij}$ (i, j = 1, ..., 4) ergibt. In weiteren Iterationsschritten entstehen immer feinere Quadrate und Intervalle. Fig. 3 zeigt eine schematische Darstellung dieses Verfahrens.

Die ineinander enthaltenen Quadrate $D_i \supset D_{ij} \supset D_{ijk} \supset ...$ enthalten genau einen gemeinsamen Punkt $P_{ijk...}$, während die ineinander enthaltenen Intervalle $T_i \supset T_{ij} \supset ...$ genau einen gemeinsamen Punkt $T_{ijk...}$ enthalten. Dann ist die Abbildung

$$f: \begin{cases} I \rightarrow E \\ t_{ijk...} \rightarrow P_{ijk...} \end{cases}$$

eine stetige raumfüllende Kurve, d.h. eine Peano-Kurve. Die in der obigen Skizze in den jeweiligen Iterationsschritten enthaltenen Kurven werden auch Hilbertkurven genannt.

3.3 Diskretisierung einer raumfüllenden Kurve

Die Diskretisierung einer raumfüllenden (oder Peano-)Kurve erhält man dadurch, daß das kontinuierliche Intervall I durch eine Menge von äquidistanten Punkten $I_N = \{s_1, ..., s_2N\} \subset I$ und das Einheitsquadrat E durch eine Menge von in beiden Raumrichtungen äquidistanten Punkten $E_N := \{q_1, ..., q_2N\} \subset E$ ersetzt wird und man die bijektive Abbildung

$$f_N : I_N \to E_N$$

als Einschränkung von f auf $I_N$ erhält:

$$f_N = f \upharpoonright_{I_N}.$$

3.4 Beispiel: Eine solche Diskretisierung erhält man, indem man im oben beschriebenen Verfahren zur Konstruktion einer Peano-Kurve im z.B. dritten Iterationsschritt die Mittelpunkte der Intervalle $T_{ijk}$ den Mittelpunkten der Quadrate $D_{ijk}$ zuordnet.

4. Markovketten als statistische Modelle für den arithmetischen Kodierer

4.1 Wir betrachten ein Band B mit N Pixeln, die gemäß einer zuvor festgelegten Scanningart durchnummeriert sind. B = {1,...,N}. Die Graustufen eines Pixels werden als mögliche Konfigurationen K eines Pixels interpretiert, K = $\{x_l,...,x_M\}$. Die Konfiguration eines Bandes $w$ ist dann eine Funktion auf B mit Werten in K, d.h. $w \in \Omega := K^B$.

Auf $\Omega$ betrachten wir nun verschiedene Wahrscheinlichkeitsmaße, die dann dem Kodierer zugeführt werden.

Fall 1a, unabhängig gleich verteilte Pixel-Konfigurationen:

$$\mu_1(w) := \prod_{i=1}^{N} p(w(i))$$

Dabei ist p(x) die über ein Histogramm gemessene, d.h. empirische Wahrscheinlichkeit, daß der Grauwert x in $w$ vorkommt.

4.2 Fall 2a, Markovkette der Korrelationslänge 2:

$\mu_2(w) := v(w(1)) \cdot p(w(1),w(2)) \cdot p(w(2),w(3)) \cdot ... \cdot p(w(N-1),w(N))$

dabei bezeichnet $v(x)$die Ausgangsverteilung der Grauwerte und p(x,y) die stochastische Übergangsmatrix, d.h. p(x,y) ist die Wahrscheinlichkeit, daß in $w$ auf die Konfiguration x die Konfiguration y folgt. Sie wird vom Algorithmus durch ein entsprechendes Histogramm gemessen.

Fall 3a, Markovkette der Korrelationslänge 3:

$\mu_3(w) := v(w(1),w(2)) \cdot p(w(1),w(2),w(3)) \cdot p(w(2),w(3),w(4)) \cdot ... \cdot p(w(N-2),w(N-1),w(N))$.

$v(x,y)$ bezeichnet jetzt die Anfangsverteilung der Konfiguration eines Pixelpaares und p(x,y,z) die Wahrscheinlichkeit, daß ein Pixel den Grauwert z hat, wenn der Vorgänger den Wert y und der Vor-Vorgänger den Wert x angenommen hat.

Die Länge der Markovkette kann beliebig in die Höhe getrieben werden. Mit der Länge der Kette wächst die Problematik, daß die Zahl Z den möglichen Konfigurationen L aufeinanderfolgender Pixel

$$Z = M^L$$

mit der Zahl der Pixel im Band N vergleichbar wird. In diesem Fall kann keine sinnvolle Statistik betrieben werden. Um dies zu vermeiden, verwenden wir eine Methode des sogenannten "Coarse-Graining"; dabei werden die zuvor eingeführten Wahrscheinlichkeitsmaße folgendermaßen abgeändert.

Die Konfigurationen K eines Pixels werden in disjunkte Teilmengen zerlegt, typischerweise drei, vier oder fünf:

$$K^{\cdot} = \bigcup_{i:=1}^{g} K^{\cdot}_{i} \; , \; K^{\cdot}_{i} \; \cap \; K^{\cdot}_{j} \; = \; \varnothing \text{ falls } i \neq j.$$

Das auf $\Omega$ definierte Maß wird jetzt folgendermaßen abgeändert

Fall 2b, Markovkette mit Coarse-Graining:

$$\hat{\mu}_2(w) \; = \; \hat{\nu}(w(1)) \cdot \hat{p}(w(1), w(2)) \cdot \hat{p}(w(3), w(4)) \cdot \ldots \cdot \hat{p}(w(N-1), w(N)),$$

Dabei bezeichnet $\hat{\nu}(y)$die Ausgangsverteilung auf der Zerlegung $\{K_1,...,K_g\}$, d. h. die Wahrscheinlichkeit, daß $K_i$ mit $x \in K_i$ vorkommt; $\hat{p}(x,y)$ ist die Wahrscheinlichkeit, daß die Konfiguration y eintritt, wenn der Vorgänger sich in einer Konfiguration $x \in K_i$ befindet nach Konstruktion ist $\hat{p}(x_1,y) = \hat{p}(x_2,y)$, falls $x_1$ und $x_2$ in ein und demselben $K_i$ sind). Die Übergangswahrscheinlichkeiten $\hat{p}(x,y)$ werden von unserem Algorithmus gemessen.

4.3 Fall 3b, Markovkette der Korrelationslänge 3 mit Coarse-Graining:

$$\hat{\mu}_3(w) \; := \; \hat{\nu}(w(1), w(2)) \cdot \hat{p}(w(1), w(2), w(3)) \cdot \hat{p}(w(2), w(3), w(4)) \cdot \ldots \cdot \hat{p}(w(N-2), w(N-1), w(N)).$$

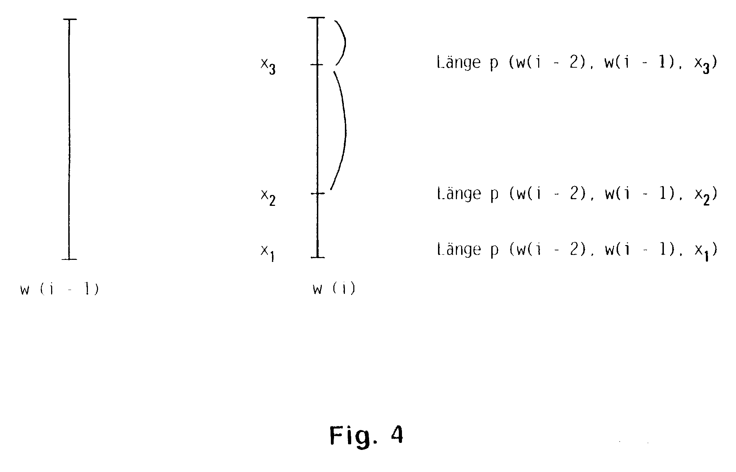

$\hat{\nu}(x,y)$ bezeichnet wiederum die Anfangsverteilung der Paare $(K_i,K_j)$, wobei $x \in K_i$ und $x \in K_j$ ist. $\hat{p}(x,y,z)$ ist die Wahrscheinlichkeit, daß eine Pixelkonfiguration $z \in K_m$ auftritt, falls der Vorgänger y in $K_n$ und der Vor-Vorgänger x in $K_m$ liegt. $\hat{p}$ wird vom Algorithmus gemessen.
Der Algorithmus mit und ohne Coarse-Graining kann auf beliebig lange Markovketten ausgedehnt werden.
Die Wahrscheinlichkeitsmaße werden vom arithmetischen Kodierer in folgender Weise benützt: Die i-te Pixelkonfiguration wird rekursiv durch die Angabe eines halboffenen Teilintervalls in dem Intervall des Vorgängers kodiert (siehe Fig. 4 für M = 3)
Dabei wird das Intervall, das die Konfiguration des Pixels (i - 1) kodiert, proportional zu $\hat{p}(w(i - 2), w(i - 1), \cdot)$ in der in K gewählten Ordnung aufgeteilt. Die Konfiguration w(i) wird dann durch das Subintervall der Länge p(w(1), w(2), w(3)) (Länge des vorangehenden Intervalls) kodiert. Dies ist eine Weiterführung der im Originalartikel erklärten Methode.
Zur Beschleunigung des Zugriffs auf die kummulierten Frequenzen verwenden wir den Algorithmus von Fenwick. (P. Fenwick, 1994, A new data structure for cummalitive probability tables, Software-Practice and Experience 24, 3 page 327-336. Errata in 24, 7 page 677.)

5. Diskrete Wavelettransformation in faktorisierter Form

Die Polyphasenmatrix P(z) eines diskreten Waveletfilters endlicher Länge (Abschnitt 1.9) kann in Dreiecksmatrizen faktorisiert werden, bis auf eine konstante 2 x 2 Matrix. Die Durchführung der diskreten Wavelettransformation gemäß dieser Faktorisierung beschleunigt die Transformation um ca. einen Faktor 2. Falls die Koeffizienten des diskreten Waveletfilters dyadische Zahlen sind, kann die Faktorisierung innerhalb der Matrizen mit dyadischen Eintragungen gemacht werden. Dies führt auf einen besonders schnellen Algorithmus zur diskreten Wavelettransformation; denn die Konvolutionen enthalten jetzt nur noch Multiplikationen mit ganzen Zahlen und binäre Shifts.

6. Generierung von Thumbnails

Beim Empfang von Wavelet tranformierten Bilddaten können sogenannte Thumbnails erzeugt werden. Thumbnails sind Bilder etwa in der Größe eines Daumennagels. Wavelet-Algorithmen eignen sich besonders gut dafür. Erfindungsgemäß werden zur Generierung von Thumbnails in den Algorithmus nur die untersten Skalenbänder verwendet, nämlich alle diejenigen, deren natürliche Größe kleiner oder gleich der Größe des Thumbnails ist. Allenfalls ist dieser Vorgang gefolgt von einem einfachen "Subsampling", nämlich dann, wenn die gewünschte Größe nicht gerade einer natürlichen Größe eines Skalenbandes entspricht. So erzeugte Thumbnails sind von hervorragender Qualität und enthalten eine sehr geringe Datenmenge.

**Patentansprüche**

1. Verfahren zur Übertragung und/oder Speicherung digitaler Daten, insbesondere Bilddaten, über einen Datenkanal, bei dem mindestens eine diskrete Wavelettransformation durchgeführt wird, die aus den Daten jeweils mindestens zwei Datenbänder erzeugt, und bei dem die von der mindestens einen diskreten Wavelettransformation erzeugten Datenbänder zur Speicherung und/oder Einspeisung in den Datenkanal weiterverarbeitet werden, dadurch gekennzeichnet, daß die von der mindestens einen Wavelettransformation erzeugten Datenbänder einzeln weiterverarbeitet und unabhängig von der Weiterverarbeitung und Übertragung und/oder Speicherung anderer Datenbänder gespeichert und/oder an den Datenkanal übertragen werden.

2. Verfahren nach Anspruch 1, dadurch gekennzeichnet, daß die Weiterverarbeitung eines jeden Datenbandes nach der Wavelettransformation eine Quantisierung der in dem Datenband enthaltenen Daten umfasst.

3. Verfahren nach Anspruch 2, dadurch gekennzeichnet, daß die Weiterverarbeitung eines jeden Datenbandes nach der Quantisierung eine Kodierung der quantisierten Daten umfasst.

4. Verfahren nach Anspruch 3, dadurch gekennzeichnet, daß die Daten eines jeden Datenbandes bei der Kodierung komprimiert werden.

5. Verfahren nach einem der Ansprüche 3 oder 4, dadurch gekennzeichnet, daß die Daten Bilddaten sind und die Kodierung eine Präkodierung umfasst, bei der 2-dimensionale Bilddaten in einen 1-dimensionalen Datenstrom übertragen werden.

6. Verfahren nach Anspruch 4, gekennzeichnet durch eine Präkodierung nach einem der Ansprüche 23 bis 26.

7. Verfahren zur Übertragung und/oder Speicherung digitaler Daten, insbesondere Bilddaten, über einen Datenkanal, insbesondere nach einem der vorstehenden Ansprüche, bei dem mindestens eine diskrete Wavelettransformation durchgeführt wird, die aus den Daten jeweils mindestens zwei Datenbänder erzeugt, und bei dem die von der mindestens einen diskreten Wavelettransformation erzeugten Datenbänder zur Speicherung und/oder Einspeisung in den Datenkanal weiterverarbeitet werden, dadurch gekennzeichnet, daß bei dem Verfahren mindestens eine interpolierende Wavelettransformation durchgeführt wird.

8. Vorrichtung zur Durchführung des Verfahrens nach einem der vorstehenden Ansprüche mit einer Zentralen Prozessoreinheit (CPU), einer Dateneingabeschnittstelle für digitale Daten, insbesondere Bilddaten, einer Speichereinrichtung und/oder einer mit einem Datenübertragungskanal koppelbaren Datenausgabeschnittstelle, einer Einrichtung zur Durchführung mindestens einer Wavelettransformation und einer Einrichtung zur Weiterverarbeitung der von der Einrichtung zur Durchführung mindestens einer Wavelettransformation erzeugten Datenbänder zur Speicherung der weiterverarbeiteten Daten auf einem Datenträger und/oder zur Einspeisung der weiterverarbeiteten Daten über die Datenausgabeschnittstelle in den Datenkanal, dadurch gekennzeichnet, daß die Einrichtung zur Weiterverarbeitung die von der Einrichtung zur Durchführung mindestens einer Wavelettransformation erzeugten Datenbänder einzeln weiterverarbeitet und unabhängig von der Weiterverarbeitung und Speicherung und/oder Übertragung anderer Datenbänder speichert und/oder an die Datenausgabeschnittstelle überträgt.

9. Vorrichtung nach Anspruch 8, dadurch gekennzeichnet, daß die Einrichtung zur Weiterverarbeitung die in jedem Datenband enthaltenden Daten einzeln quantisiert.

10. Vorrichtung nach Anspruch 9, dadurch gekennzeichnet, daß die Einrichtung zur Weiterverarbeitung die quantisierten Daten kodiert.

11. Vorrichtung nach einem der Ansprüche 9 oder 10,
dadurch gekennzeichnet, daß die Einrichtung zur Weiterverarbeitung die quantisierten Daten beim Quantisieren oder Kodieren auch komprimiert.

12. Vorrichtung nach einem der Ansprüche 10 oder 11,
dadurch gekennzeichnet, daß die Daten Bilddaten sind und die Einrichtung zur Weiterverarbeitung bei der Kodierung der Daten eines Datenbandes eine Präkodierung durchführt, bei der 2-dimensionale Bilddaten in einen 1-dimensionalen Datenstrom übertragen werden.

13. Vorrichtung nach einem der Ansprüche 8 bis 11,
dadurch gekennzeichnet, daß die Daten Bilddaten sind und die Einrichtung zur Weiterverarbeitung bei der Kodierung der Daten eines Datenbandes eine Präkodierung nach einem der Ansprüche 23 bis 26 durchführt.

14. Speicherelement zur Speicherung von Daten, insbesondere CD-ROM oder Diskette, auf dem mindestens ein auf einer Datenverarbeitungseinheit ausführbares Anwendungsprogramm gespeichert ist, das durch Wavelettransformation digitaler Bilddaten entstandene Datenbänder zu verarbeiten vermag,
dadurch gekennzeichnet, daß ein auf dem Speicherelement gespeicherten Anwendungsprogramm die Datenbänder einzeln und unabhängig von der Weiterverarbeitung und Übertragung und/oder Speicherung anderer Datenbänder zur Speicherung und/oder Übertragung an einen Datenkanal weiterverarbeitet.

15. Speicherelement nach Anspruch 14,
dadurch gekennzeichnet, daß auf dem Speicherelement mindestens ein auf einer Datenverarbeitungseinheit ausführbares Anwendungsprogramm gespeichert ist, das digitale Bilddaten wavelettransformiert und dabei aus den Bilddaten jeweils mindestens zwei Datenbänder erzeugt.

16. Speicherelement nach einem der Ansprüche 14 oder 15,
dadurch gekennzeichnet, daß ein auf dem Speicherelement gespeicherten Anwendungsprogramm die Datenbänder einzeln und unabhängig von der Weiterverarbeitung und Übertragung und/oder Speicherung anderer Datenbänder zur Speicherung und/oder Übertragung an einen Datenkanal weiterverarbeitet und dabei die in den Datenbändern enthaltenen Daten einzeln quantisiert und anschließend kodiert.

17. Speicherelement nach Anspruch 16,
dadurch gekennzeichnet, daß ein auf dem Speicherelement gespeicherten Anwendungsprogramm die Datenbänder einzeln und unabhängig von der Weiterverarbeitung und Übertragung und/oder Speicherung anderer Datenbänder zur Speicherung und/oder Übertragung an einen Datenkanal weiterverarbeitet und dabei die in den Datenbändern enthaltenen Daten einzeln quantisiert, kodiert und dabei auch komprimiert werden.

18. Speicherelement nach einem der zwei vorstehenden Ansprüche 13 bis 16, dadurch gekennzeichnet, daß die ein oder mehreren Computerprogramme so eingerichtet sind, daß sie Bilddaten empfangen und bei der Kodierung der Bilddaten eines Datenbandes eine Präkodierung durchführen, bei der zweidimensionale Bilddaten in einen eindimensionalen Datenstrom übertragen werden.

19. Speicherelement zur Speicherung von Daten, insbesondere CD-ROM oder Diskette, auf dem mindestens ein auf einer Datenverarbeitungseinheit ausführbares Anwendungsprogramm gespeichert ist, das durch eine diskrete Wavelettransformation digitaler Bilddaten entstandene Datenbände zu verarbeiten vermag, dadurch gekennzeichnet, daß die diskrete Wavelettransformation eine interpolierende Wavelettransformation ist.

20. Bilddatenübertragungsverfahren bei dem digitale Bilddaten über einen Datenkanal übertragen werden,
dadurch gekennzeichnet, daß auf der Senderseite ein Verfahren nach einem der Ansprüche 1 bis 6 und auf der Empfängerseite die zu einem der Verfahren nach einem der Ansprüche 1 bis 6 invertierten Verfahrensschritte in umgekehrter Reihenfolge durchgeführt werden.

21. Bilddatenübertragungsvorrichtung zur Übertragung digitaler Bilddaten über einen Datenkanal,
gekennzeichnet durch eine Vorrichtung nach einem der Ansprüche 8 bis 13 und eine Empfangsvorrichtung, die die zu einem der Verfahren nach einem der Ansprüche 1 bis 6 invertierten Verfahrensschritte in umgekehrter Reihenfolge durchführt.

22. Verfahren zur Aufbereitung digitaler Daten, insbesondere Bilddaten, zur Speicherung und/oder Übertragung der Daten über einen Datenkanal nach einer der Bilddatenaufbereitung nachgeschalteten Quantisierung und Kodierung, bei der mindestens eine diskrete Wavelettransformation mit einem Waveletfilter durchgeführt wird, der mindestens einen nicht-ganzzahligen Koeffizienten enthält, dadurch gekennzeichnet, daß die Koeffizienten des Waveletfilters algebraische Zahlen sind.

23. Verfahren zur Speicherung und/oder Übertragung digitaler Daten - insbesondere Bilddaten - über einen Datenkanal, das zumindest die Verfahrensschritte der Datenaufbereitung, Quantisierung und Kodierung umfasst, dadurch gekennzeichnet, daß das Verfahren eine Datenaufbereitung nach Anspruch 20 beinhaltet.

24. Speicherelement zur Speicherung von Daten, insbesondere CD-ROM oder Diskette, auf dem mindestens ein auf einer Datenverarbeitungseinheit ausführbares Anwendungsprogramm gespeichert ist, das digitale Daten - insbesondere Bilddaten - durch eine Wavelettransformation mit mindestens zwei Waveletfiltern aufbereitet, wobei mindestens ein Koeffizient eines bei der Wavelettransformation verwendeten Waveletfilters nicht ganzzahlig ist, dadurch gekennzeichnet, daß die Koeffizienten der Waveletfilter algebraische Zahlen sind.

25. Verfahren zur Aufbereitung digitaler Daten, insbesondere Bilddaten, zur Speicherung und/oder Übertragung der Daten über einen Datenkanal nach einer der Bilddatenaufbereitung nachgeschalteten Quantisierung und Kodierung, bei der mindestens eine diskrete Wavelettransformation mit einem Waveletfilter durchgeführt wird, der mindestens einen nicht-ganzzahligen Koeffizienten enthält, dadurch gekennzeichnet, daß die Koeffizienten des Waveletfilters dyadische Zahlen sind.

26. Verfahren zur Speicherung und/oder Übertragung digitaler Daten - insbesondere Bilddaten - über einen Datenkanal, das zumindest die Verfahrensschritte der Datenaufbereitung, Quantisierung und Kodierung umfasst, dadurch gekennzeichnet, daß das Verfahren eine Datenaufbereitung nach Anspruch 22 beinhaltet.

27. Speicherelement zur Speicherung von Daten, insbesondere CD-ROM oder Diskette, auf dem mindestens ein auf einer Datenverarbeitungseinheit ausführbares Anwendungsprogramm gespeichert ist, das digitale Daten - insbesondere Bilddaten - durch eine Wavelettransformation mit mindestens zwei Waveletfiltern aufbereitet, wobei mindestens ein Koeffizient eines bei der Wavelettransformation verwendeten Waveletfilters nicht ganzzahlig ist, dadurch gekennzeichnet, daß die Koeffizienten der Waveletfilter dyadische Zahlen sind.

28. Verfahren zur Präkodierung digitaler Bilddaten zur Speicherung und/oder Übermittlung der Daten an einen Datenkanal nach einer der Präkodierung nachgeschalteten Kodierung, bei dem 2-dimensionale Bilddaten $B_{i,j}$ zumindest in einem ersten Bildbereich mit einer bijektiven Funktion f in einen 1-dimensionalen Datenstrom aus Daten $D_k$ abgebildet werden, wobei i,j,k natürliche Zahlen sind, dadurch gekennzeichnet, daß die Umkehrfunktion $f^{-1}$ eine Diskretisierung einer Peano-Kurve ist.

29. Verfahren nach Anspruch 28, dadurch gekennzeichnet, daß eine Diskretisierung einer Umkehrfunktion $f^{-1}$ eine Hilbert-Kurve ist.

30. Verfahren nach einem der Ansprüche 28 oder 29, dadurch gekennzeichnet, daß die Bilddaten außerhalb des ersten Bildbereichs in einer solchen Abtastreihenfolge abgetastet werden, daß die Verbindungslinie, die die Bilddaten außerhalb des ersten Bildbereichs ihrer Abtastreihenfolge gemäß miteinander verbindet, im wesentlichen spiralförmig um den ersten Bildbereich herum verläuft.

31. Verfahren nach einem der Ansprüche 28 bis 30, dadurch gekennzeichnet, daß der erste Bildbereich quadratisch ist und eine Kantenlänge von $2^n$ besitzt, wobei n eine natürliche Zahl ist, und anschließend der abgetastete Bildbereich linear skaliert wird.

32. Verfahren zur Speicherung und/oder Übertragung digitaler Bilddaten über einen Datenkanal, das zumindest die Verfahrensschritte der Datenaufbereitung, Quantisierung, Präkodierung und Kodierung umfasst, dadurch gekennzeichnet, daß das Verfahren eine Präkodierung nach einem der Ansprüche 23 bis 26 beinhaltet.

33. Speicherelement zur Speicherung von Daten, insbesondere CD-ROM oder Diskette, auf dem mindestens ein auf einer Datenverarbeitungseinheit ausführbares Anwendungsprogramm gespeichert ist, das 2-dimensionale Bilddaten $B_{i,j}$ zumindest in einem ersten Bildbereich mit einer bijektiven Funktion f in einen 1-dimensionalen Datenstrom aus Daten $D_k$ abbildet, wobei i,j,k natürliche Zahlen sind, dadurch gekennzeichnet, daß eine Diskretisierung einer Umkehrfunktion $f^{-1}$ eine Peano-Kurve ist.

**34.** Speicherelement nach Anspruch 33,
dadurch gekennzeichnet, daß die Umkehrfunktion $f^{-1}$ eine Diskretisierung einer Hilbert-Kurve ist.

**35.** Speicherelement nach einem der Ansprüche 33 oder 34,
dadurch gekennzeichnet, daß das Anwendungsprogramm die Bilddaten außerhalb des ersten Bildbereichs in einer solchen Abtastreihenfolge abtastet, daß die Verbindungslinie, die die Bilddaten außerhalb des ersten Bildbereichs ihrer Abtastreihenfolge gemäß miteinander verbindet, im wesentlichen spiralförmig um den ersten Bildbereich herum verläuft.

**36.** Speicherelement nach einem der Ansprüche 33 bis 35, dadurch gekennzeichnet, daß der erste Bildbereich quadratisch ist und eine Kanten
länge von $2^n$ besitzt, wobei n eine natürliche Zahl ist, und anschließend der abgetastete Bildbereich linear skaliert wird.

**37.** Verfahren zur Kodierung digitaler präkodierter Bilddaten mit einem statistischen arithmetischen Kodierer, der eine Kodierung der Bilddaten gemäß einem adaptiv veränderbaren Wahrscheinlichkeitsmaß kodiert,
dadurch gekennzeichnet, daß das Wahrscheinlichkeitsmaß eine Markovkette beliebiger Korrelationslänge mit Coarse-Graining ist.

**38.** Verfahren zur Übertragung und/oder Speicherung digitaler Daten, insbesondere Bilddaten, über einen Datenkanal, bei dem mindestens eine diskrete Wavelettransformation durchgeführt wird, die aus den Daten jeweils mindestens zwei Datenbänder erzeugt, und bei dem die von der mindestens einen diskreten Wavelettransformation erzeugten Datenbänder zur Speicherung und/oder Einspeisung in den Datenkanal weiterverarbeitet werden,
dadurch gekennzeichnet, daß die Wavelet-Transformation faktorisiert und nach jedem Transformationsschritt termweise gerundet wird.

**39.** Verfahren zur Erzeugung eines Thumbnails aus wavelet-transformierten Bilddaten,
dadurch gekennzeichnet, daß nur diejenigen Skalenbänder verwendet werden, deren natürliche Größe kleiner oder gleich der Größe des Thumbnails ist.

Fig. 1

Fig. 2

Fig. 3

$x_3$    Länge p (w(i - 2), w(i - 1), $x_3$)

$x_2$    Länge p (w(i - 2), w(i - 1), $x_2$)

$x_1$    Länge p (w(i - 2), w(i - 1), $x_1$)

w (i - 1)

w (i)

**Fig. 4**